# EUROPEAN PATENT APPLICATION

(11) **EP 3 955 409 A1**
(43) Date of publication of application: **16.02.2022**
(21) Application number: 20787625.1
(22) Date of filing: 03.04.2020
(51) Int. Cl.: H02J 7/00, B60L 50/60, B60L 58/16, B60L 58/21, G01R 31/392

(54) **BATTERY SYSTEM, RAILROAD VEHICLE, AND BATTERY MANAGEMENT METHOD**

(30) Priority: 12.04.2019 JP 2019076064
(71) Applicant: Hitachi, Ltd., Tokyo 100-8280 (JP)
(72) Inventor: YONEMOTO, Masahiro, Tokyo 100-8280 (JP); KAWAHARA, Youhei, Tokyo 100-8280 (JP); TAKAHASHI, Chiaki, Tokyo 100-8280 (JP); ISHIKAWA, Katsumi, Tokyo 100-8280 (JP)
(74) Representative: MERH-IP Matias Erny Reichl Hoffmann Patentanwälte PartG mbB
(86) International application number: PCT/JP2020/015341
(87) International publication number: WO 2020/209200

(57) **Abstract**

The object of the present invention is to ensure that the lifespan of a storage battery reaches a target lifespan. Accordingly, a representative battery system according to the present invention is provided with: a battery that can be used repeatedly, a battery control unit that controls a lifespan of the battery by constraining a battery use condition associated with battery lifespan deterioration, an estimation unit that calculates an estimated lifespan of the battery obtained by constraining the battery usage condition, and a restriction unit that, based on the calculated estimated lifespan, determines a lifespan insufficiency by which the battery falls short of a target lifespan, and restricts and resets the battery use condition of the battery control unit in order to reduce the lifespan insufficiency.

## Description

### [Technical Field]

The present invention relates to a battery system, a railroad vehicle, and a battery management method.

### [BACKGROUND OF THE INVENTION]

Environmentally friendly hybrid railroad vehicles have been developed that achieve low fuel consumption, low exhaust emissions, and low noise by using an engine generator and a secondary battery in a complementary manner.

Generally, this type of secondary battery deteriorates rapidly depending on the usage environment, such as charging/discharging and temperature, and the lifespan of these secondary batteries tends to be shortened.

Accordingly, in order to reliably achieve the battery lifespan required in the design of secondary batteries, measures such as installing extra secondary batteries, or restricting the usage environment of the secondary batteries in advance to delay deterioration have been taken.

For example, Patent Document 1 discloses a control technique for restricting a current in order to delay deterioration when the lifespan of a secondary battery is short.

### [Citation List]

### [Patent Documents]

[Patent Document 1] Japanese Unexamined Patent Application Publication No. 2016-163532

### [Summary of Invention]

### [Technical Problem]

In the hybrid railroad vehicle described above, in consideration of maintainability, replacement of the secondary battery is performed together with the replacement of other electronic parts. However, in the case that the battery system is designed such that the battery lifespan of the secondary battery is close to the assumption at the time of design, the battery lifespan may be reached before a target period (hereinafter referred to as a "target lifespan").

Accordingly, it is an object of the present invention to provide a technique for bringing the battery lifespan closer to the target lifespan.

### [Means for Solving the Problems]

In order to solve the above problems, a representative battery system of the present invention includes a battery control unit that controls a lifespan of the battery by constraining a battery usage condition associated with battery lifespan deterioration; an estimation unit that calculates an estimated lifespan of the battery obtained by constraining the battery usage condition; and a restriction unit that, in a case that the calculated estimated lifespan is less than a target lifespan of the battery, restricts and resets the battery usage condition of the battery control unit in order to extend a lifespan of the battery and reduce an insufficiency amount (hereinafter referred to as a "lifespan insufficiency") of the target lifespan.

### [Advantageous Effects of Invention]

According to the present invention, it is possible to bring a battery lifespan closer to a target lifespan.

Problems, configurations and effects other than those described above will be made clear by the following description of the embodiments.

### [Brief Description of Drawings]

[Figure 1] FIG. 1 is a diagram illustrating a configuration of a railroad vehicle 100.
[Figure 2] FIG. 2 is a flow diagram for explaining resetting of a battery usage condition.
[Figure 3] FIG. 3 is a diagram for explaining an example of an estimated lifespan prediction process.
[Figure 4] FIG. 4 is a diagram for explaining extension of a battery lifespan.
[Figure 5] FIG. 5 is a diagram for explaining an example of temperature control.
[Figure 6] FIG. 6 is a diagram for explaining a configuration of a train formation.
[Figure 7] FIG. 7 is a flow diagram for explaining an accommodation operation for current insufficiency.

### [Description of Embodiment(s)]

Hereinafter, embodiments of the present invention will be described with reference to the drawings.

### [Embodiment 1]

### <Configuration of Embodiment 1>

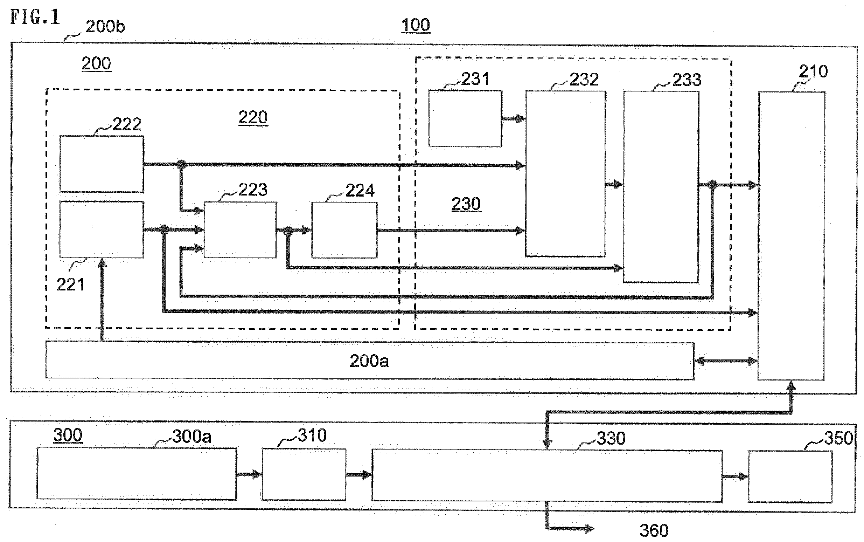

FIG. 1 is a diagram illustrating a configuration of a railroad vehicle 100.

In the figure, the railroad vehicle 100 is configured to include a battery system 200 and a vehicle engine 300.

The battery system 200 is configured to incorporate a secondary battery 200a (for example, a lithium ion secondary battery cell), a battery control unit 210, an estimation unit 220, and a restriction unit 230 in an integrally replaceable battery replacement package 200b.

For example, the functions of the battery control unit 210, the estimation unit 220, and the restriction unit 230 may be realized by operating a processing device (including a memory) such as an ASIC, FPGA or a CPU with software.

The secondary battery 200a is a battery that can be used repeatedly by charging and discharging. The secondary battery 200a is provided with a mechanism for temperature management (a Peltier device, a heater, a cooling fan, air cooling, liquid cooling, or the like), and a current sensor, a voltage sensor, a temperature sensor, or the like for measuring electrical characteristics, as necessary.

The battery control unit 210 is initially set so as to constrain battery usage conditions associated with battery lifespan deterioration of the secondary battery 200a, such as charge/discharge control and the operating temperature, and control the lifespan of the secondary battery 200a so as to extend the lifespan from the target lifespan. Hereinafter, "constraining" in the present disclosure refers to setting limits such as upper limits and lower limits for battery usage conditions associated with battery lifespan deterioration, and using the battery.

The estimation unit 220 includes a battery information acquisition unit 221 that acquires battery information such as electrical characteristics from the secondary battery 200a, a time information acquisition unit 222 that acquires time information related to the use of the secondary battery 200a, a history storage unit 223 that stores battery information, time information, and a history of battery usage conditions, and a lifespan prediction unit 224 that obtains an estimated lifespan of the secondary battery 200a based on the history of the history storage unit 223.

The restriction unit 230 includes a target lifespan setting unit 231 in which a target lifespan is set as the replacement period of the battery replacement package 200b, a lifespan insufficiency calculation, unit 232 that calculates a predicted lifespan insufficiency of the secondary battery 200a based on the difference between an estimated lifespan and the target lifespan, and a restriction setting unit 233 that restricts and resets the battery usage condition of the battery control unit 210 in order to reduce the lifespan insufficiency.

The vehicle engine 300 includes a fuel engine 300a (a diesel engine or the like) such as a diesel engine, a generator 310 that generates three-phase electric power by the power of the fuel engine 300a, a main converter 330 (a converter/inverter), a railroad vehicle motor 350 that generates propulsive force for the railroad vehicle 100, and a power supply line 360 (a power supply for a door opening/closing device, an air conditioner, or the like) in the railroad vehicle 100.

The main converter 330 has a converter function for converting the three-phase power generated by the generator 310 into DC power, a charging function for charging the secondary battery 200a with the converted DC power via the battery control unit 210, an inverter function for converting the DC power of the secondary battery 200a into three-phase power via the battery control unit 210, and a hybrid function for complementarily switching the supply sources of the various types of electric power supplied to the railroad vehicle motor 350 and the power supply line 360 between the generator 310 and the secondary battery 200a.

### <Resetting of the Battery Usage Conditions>

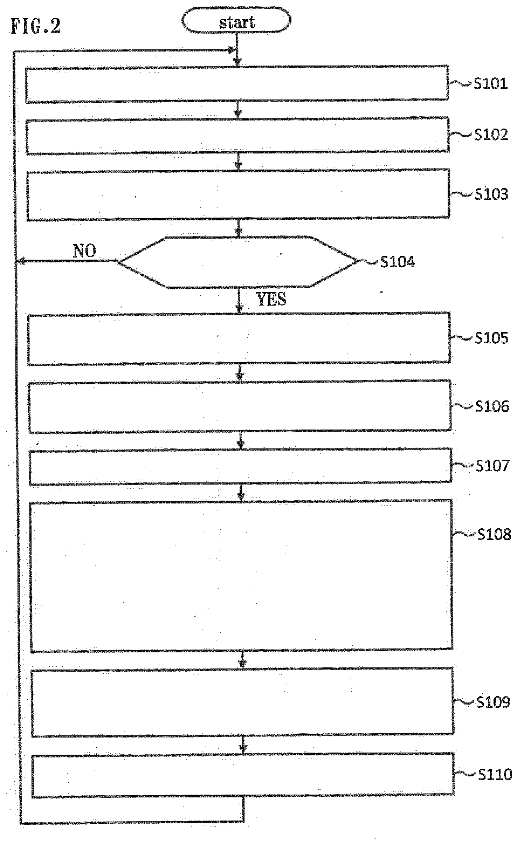

FIG. 2 is a flow diagram for explaining resetting of the battery usage conditions.

The operation of Embodiment 1 will be described in accordance with the step numbers illustrated in the drawing.

Step S101: The battery information acquisition unit 221 acquires electrical characteristics (a current value I, a voltage value V, a temperature T) from a current sensor, a voltage sensor, a temperature sensor, or the like attached to or nearby the secondary battery 200a, and outputs the acquired electrical characteristics to the history storage unit 223. The history storage unit 223 makes a set of information such as "electrical characteristics," "time information," "past battery usage conditions" and the like, and stores it in history as battery information. That is, in Step S101, the battery information is periodically acquired and stored in history.

Step S102: The lifespan prediction unit 224 maintains a battery deterioration database therein. The lifespan prediction unit 224 determines a degree of deterioration of the secondary battery 200a by checking the history of the battery information stored in the history storage unit 223 against the battery deterioration database. That is, in Step S102, the degree of degradation is determined from the (history of the) battery information.

Step S103: The lifespan prediction unit 224 stores the progress of the degree of deterioration (the degree of deterioration information) as history in the history storage unit 223 together with the time information. That is, in Step 103, the degree of deterioration is stored.

Step S104: The estimation unit 220 determines whether or not it is the reset timing of the battery usage condition based on the degree of deterioration of the battery and a predetermined time period.

In the case that it is not the reset timing of the battery usage condition, the estimation unit 220 returns to the operation of Step S101. On the other hand, in the case that it is determined that it is the reset timing of the battery usage condition, the estimation unit 220 shifts to the operation of Step S105.

The reset timing may be determined at regular intervals, at unequal time intervals determined in advance, or at irregular intervals. In addition, the reset timing may be determined each time the degree of deterioration progresses by a fixed amount or a predetermined amount.

Step S105: The lifespan prediction unit 224 predicts the estimated lifespan based on the progress of the degree of deterioration according to the present battery usage conditions.

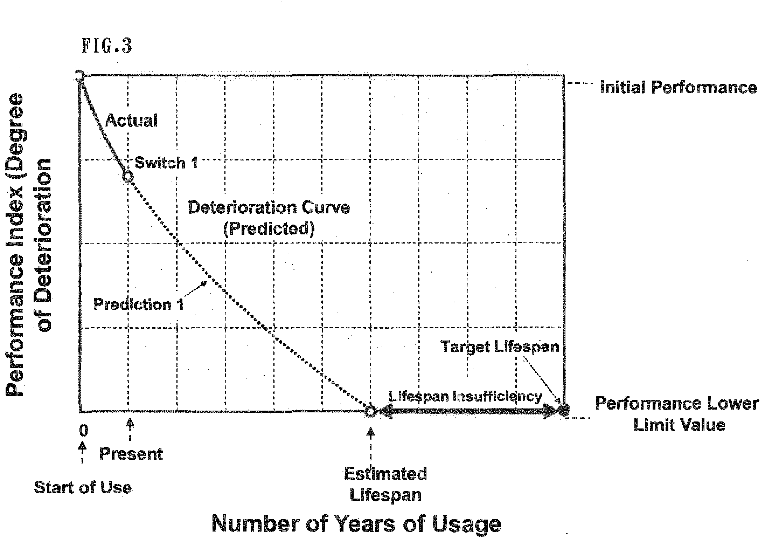

FIG. 3 is a diagram for explaining an example of an estimated lifespan prediction process.

The horizontal axis in the figure indicates the number of years of usage, and the vertical axis indicates a performance index. It should be noted that the upper limit of the vertical axis is the initial performance of the secondary battery 200a and corresponds to a degree of degradation of zero, and the lower limit of the vertical axis is the performance lower limit value of the secondary battery 200a and corresponds to the upper limit of the degree of degradation.

In the figure, the actual deterioration curve indicated by the solid line is the deterioration curve under the present battery usage conditions stored in the history storage unit 223 in Step S103. On the other hand, the deterioration curve (prediction) indicated by the dotted line predicts the progress of the secondary battery 200a from the present onward.

In general, in lithium ion secondary batteries or the like, a "root law deterioration curve" in which the degree of deterioration is directly proportional to the (1/2) power of the battery usage time is experimentally known. Accordingly, by fitting the deterioration curve of this root law to the deterioration curve (the solid line) under the current battery usage conditions, the deterioration curve (prediction) from the present onward, as indicated by a dotted line, can be obtained.

The number of years of usage when this deterioration curve (prediction) reaches the upper limit of the degree of deterioration (the performance lower limit value in FIG. 3) is the estimated lifespan.

It should be noted that, since the root law is a general example of a deterioration characteristic, it is preferable to use a deterioration law obtained for the actual secondary battery 200a.

Step S106: The lifespan insufficiency calculation unit 232 obtains the lifespan insufficiency by subtracting the estimated lifespan from the target lifespan. That is, in Step S106, the (predicted) lifespan insufficiency that falls below the target lifespan is obtained based on the estimated lifespan.

Step S107: The restriction setting unit 233 determines the reduction amount (that is, the extension amount of the battery lifespan) of the lifespan insufficiency to the next time. At this time, rather than reducing the predicted lifespan insufficiency to zero all at once, the reduction in the lifespan insufficiency may be distributed in a well-balanced manner during the period from the present to the target lifespan, thereby gradually extending the battery lifespan. For example, a predetermined ratio (for example, 10% to 90%, preferably 25% to 75%, more preferably 40% to 60%) of the lifespan insufficiency may be determined as the reduction amount (the extension amount of the battery lifespan) to the next time. In addition, in the final period until the target lifespan is reached, the predetermined ratio may be changed to nearly 100%, thereby substantially matching the battery lifespan with the target lifespan.

Step S108: The restriction setting unit 233 restricts the present battery usage conditions so as to realize the lifespan extension of the lifespan insufficiency to the next time. As the battery usage condition to be restricted here, at least one or a combination of two or more of the following is selected.
- Charge Voltage Constraint
- Discharge Current Constraint
- Charge Current Constraint
- Battery State of Charge (SOC) Constraint
- Battery Temperature Constraint

Such a restriction of the battery usage conditions can be appropriately set by trying a change of the deterioration curve (prediction) in advance with a simulator or a deterioration acceleration experiment of the secondary battery 200a.

Step S109: There are a plurality of candidates for the restricted battery usage conditions. Depending on which of these candidates is selected, the usage efficiency of the secondary battery 200a and the resulting deterioration in fuel consumption of the fuel engine 300a change. Accordingly, the restriction setting unit 233 selects, from among the candidates, a candidate for minimizing (that is, optimizing) the deterioration of the fuel consumption plan of the fuel engine 300a as the restricted battery usage condition. This selection operation is performed based on rules created by a simulation of the fuel consumption carried out in advance by the designer or the like.

Step S110: The restriction setting unit 233 resets the restricted battery usage conditions with respect to the battery control unit 210 as the battery usage conditions until the next reset timing.

When the resetting of the battery-usage condition is completed, the operation returns from Step S110 illustrated in FIG. 2 to Step S101. By means of this operation, the resetting for restricting the battery usage conditions is repeated in a stepwise fashion.

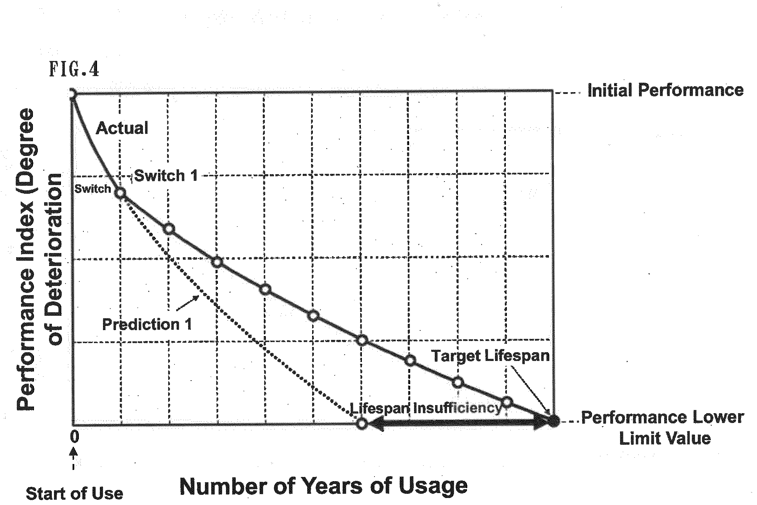

FIG. 4 is a diagram for explaining extension of a battery lifespan.

In the figure, the time period from the start of use to the target lifespan is divided into a plurality of time periods, and the reset timings of the battery usage conditions (the white circles in FIG. 4) are provided. For each reset timing, the lifespan insufficiency is estimated, and the battery usage conditions are reset to extend the battery lifespan.

These operations continue until the target lifespan (the replacement period) is reached and the battery replacement package 200b is replaced.

### <Operation to Constrain the Upper Limit Temperature of the Battery>

Next, an operation to constrain the upper limit temperature of the secondary battery 200a in a case that the secondary battery 200a does not have a cooling mechanism (a Peltier device, a cooling fan, liquid cooling, or the like) will be described.

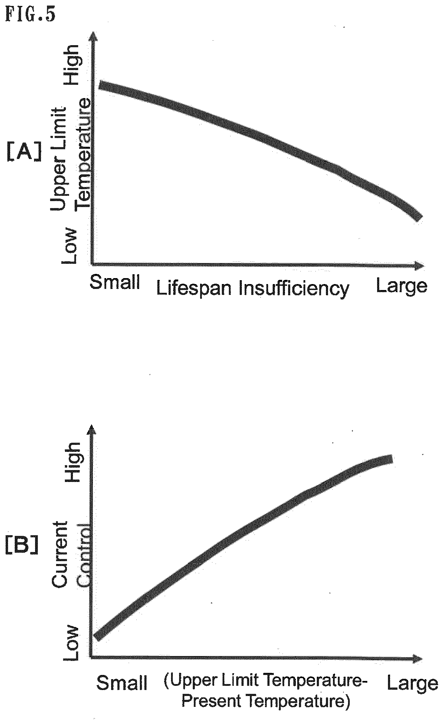

[A] in FIG. 5 is a diagram that illustrates lifespan insufficiency on the horizontal axis and an upper limit temperature on the vertical axis.

As illustrated in [A] in FIG. 5, the battery control unit 210 resets the battery usage conditions such that the larger the lifespan insufficiency, the lower the upper limit temperature of the battery. That is, [A] in the figure illustrates an example of resetting the upper limit temperature due to the lifespan insufficiency.

[B] in FIG. 5 is a diagram that illustrates (upper limit temperature-present temperature) on the horizontal axis and the current amount of the battery on the vertical axis.

When the present temperature of the secondary battery 200a approaches the upper limit temperature, as illustrated in [B] of FIG. 5, the battery control unit 210 suppresses the amount of heat generated by the secondary battery 200a by reducing the amount of charge/discharge current of the secondary battery 200a such that the present temperature does not exceed the upper limit temperature. That is, [B] in FIG. 5 illustrates an example of current control to prevent exceeding the upper limit temperature.

By means of such an operation of the battery control unit 210, the upper limit temperature of the secondary battery 200a can be constrained.

### <Effect of Embodiment 1>

Hereinafter, the effects of Embodiment 1 will be described.

(1) In Embodiment 1, the battery usage conditions of the battery control unit 210 are reset so as to extend the battery lifespan of the secondary battery 200a. By resetting the battery usage conditions, the lifespan of the secondary battery 200a can be extended to a target lifespan.
(2) In Embodiment 1, as a battery usage condition, the charging voltage was restricted as an example. By reducing the upper limit of the charging voltage to delay the deterioration of the secondary battery 200a, the battery lifespan is extended to the target lifespan. Alternatively, by increasing the lower limit of the charging voltage to delay the deterioration of the secondary battery 200a, the battery lifespan is extended to the target lifespan.
(3) In Embodiment 1, as a battery usage condition, the discharge current was restricted as an example. By restricting the discharge current to delay the deterioration of the secondary battery 200a, the battery lifespan is extended to the target lifespan.
(4) In Embodiment 1, as a battery usage condition, the charge current was restricted as an example. By limiting the charge current to delay the deterioration of the secondary battery 200a, the battery lifespan is extended to the target lifespan.
(5) In Embodiment 1, as a battery usage condition, a State of Charge condition (SOC) was restricted as an example. By reducing the battery SOC to delay the deterioration of the secondary battery 200a, the battery lifespan is extended to the target lifespan.
(6) In Embodiment 1, as a battery usage condition, the battery temperature was restricted as an example. By restricting the battery temperature to delay the deterioration of the secondary battery 200a, the battery lifespan is extended to the target lifespan.
(7) In Embodiment 1, in the case that there are a plurality of candidates or combinations thereof for the battery usage condition to be restricted, the one that minimizes the deterioration of the fuel consumption of the fuel engine 300a is selected. This selection action makes it possible to minimize fuel consumption deterioration.
(8) In Embodiment 1, the estimated lifespan in the case that the present battery usage conditions are used is obtained by the same arithmetic processing as applying the predicted deterioration curve (the solid curve in FIG. 3 and FIG. 4) of the secondary battery 200a to the actual deterioration curve (the solid curve in FIG. 3 and FIG. 4) using the present battery usage conditions.
   In general, the calculation of the estimated lifespan is complicated because other deterioration factors (for example, the speed and distance traveled by the railroad vehicle 100, the weight load of the railroad vehicle 100, the difference in speed changes such as between limited express trains and local trains, and the like) are involved in the calculation of the estimated lifespan. However, by applying the predicted deterioration curve to an actual deterioration curve (the solid curve in FIG. 3 and FIG. 4) that reflects these deterioration factors, it becomes possible to easily and accurately calculate the estimated lifespan.
(9) In Embodiment 1, as illustrated in FIG. 4, the resetting of the battery usage conditions is performed gradually. The estimation accuracy of the battery lifespan becomes more accurate as the history of the battery information is accumulated. Accordingly, by repeating the estimation of the battery lifespan and the resetting of the battery usage conditions gradually as the target lifespan is approached, it becomes possible to make the battery lifespan closely coincide with the target lifespan.
(10) In Embodiment 1, since the battery usage conditions are reset gradually, the battery usage conditions are reset from a relatively early stage. Accordingly, it is possible to gradually start extending the battery lifespan from a stage in which the battery performance is relatively sufficient, and it is possible to prevent a situation in which the battery lifespan is insufficient to reach the target lifespan in the final stages.
(11) In Embodiment 1, as described above, the battery lifespan substantially coincides with the target lifespan (that is, the replacement period of the battery replacement package 200b). Accordingly, by replacing the battery replacement package 200b, it becomes possible to replace the secondary battery 200a, the battery control unit 210, the estimation unit 220, and the restriction unit 230 together, thereby improving the maintainability of battery replacement in the railroad vehicle 100.

### [Embodiment 2]

Next, an operation of performing mutual compensation between train formation vehicles for a current insufficiency due to the constraint of the battery usage conditions will be described as Embodiment 2.

### <Configuration of Embodiment 2>

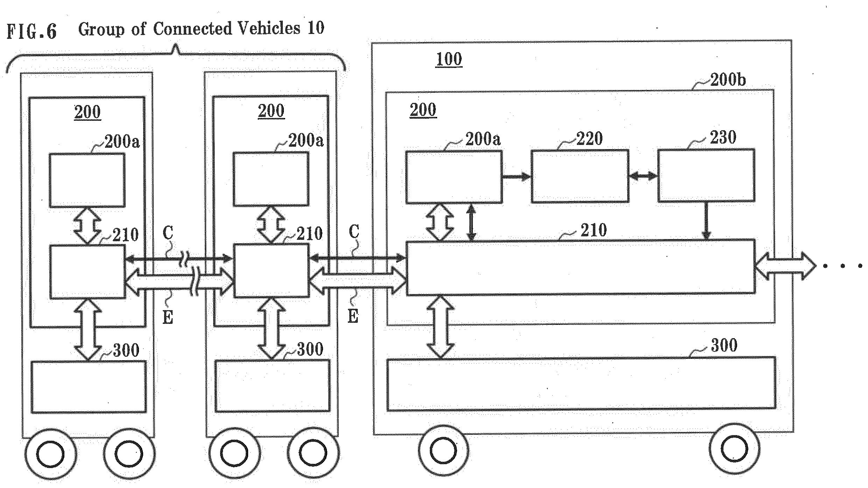

FIG. 6 is a diagram for explaining the configuration of a train formation.

It should be noted that, in FIG. 6, the same reference numerals are assigned to the same components as those of Embodiment 1, and a repetitive description thereof is omitted.

As a train formation, a plurality of connected vehicles 10 are connected in a row in front of and behind the railroad vehicle 100 via a mechanical coupler or the like.

Each of the connected vehicles 10 is provided with a battery system 200 (the battery control unit 210, the secondary battery 200a, and the like) and a vehicle engine 300 similar to those of the railroad vehicle 100.

Since the battery system 200 of these vehicles is replaced at different times, the constraints on the battery usage conditions also differ from vehicle to vehicle.

The control system C and the power system E are connected between these vehicles via an electric coupler or a jumper coupler attached to the mechanical coupler.

### <Operation of Embodiment 2>

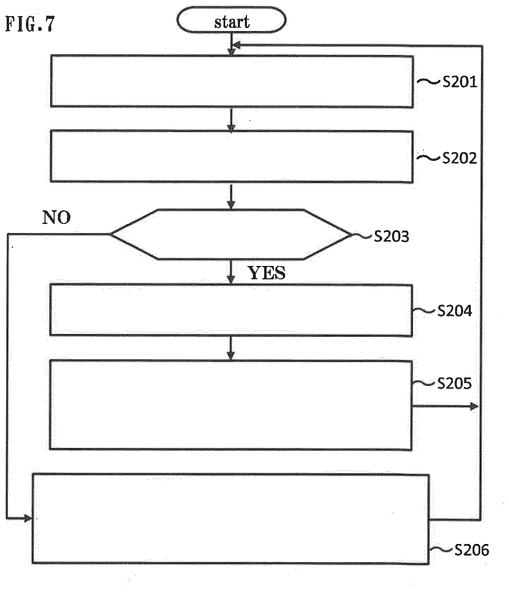

FIG. 7 is a flow diagram for explaining an accommodation operation for current insufficiency.

Hereinafter, the operation will be described in accordance with the step numbers illustrated in FIG. 7.

S201: The battery control unit 210 acquires the upper limit value of the discharge current that can be output from the secondary battery 200a based on the constraints of the present battery usage conditions.

S202: The battery control unit 210 of the railroad vehicle 100 estimates the amount of discharge current required for the secondary battery 200a in accordance with the operating state of the railroad vehicle, such as the acceleration or deceleration of the vehicle speed.

Step S203: The battery control unit 210 of the railroad vehicle 100 compares the required value of the discharge current determined in S201 with the upper limit value determined in Step S202. In the case that a discharge current greater than the upper limit value is required, the battery control unit 210 determines that the discharge current is insufficient in the railroad vehicle 100, and shifts the operation to Step S204. On the other hand, in the case that the battery control unit 210 determines that a discharge current less than the upper limit value is sufficient, the railroad vehicle 100 determines that the discharge current has a surplus, and shifts the operation to Step S206. That is, in Step S203, in the case that "required discharge current > upper limit value" is YES, the process proceeds to S204, and if NO, the process proceeds to S206.

Step S204: The battery control unit 210 of the railroad vehicle 100 communicates, via the control system C, to another group of connected vehicles 10 that the discharge current is insufficient in the railroad vehicle 100 alone. Among the other connected vehicles 10, a connected vehicle 10 that has a secondary battery 200a with a surplus of discharge current distributes the surplus of discharge current to the electric power system E. That is, in Step S204, the current insufficiency is communicated to another connected vehicle.

Step S205: The battery control unit 210 of the railroad vehicle 100 receives, via the electric power system E, the supply of the discharge current from the secondary battery 200a of the other connected vehicle 10 having a surplus of discharge current, and compensates for the insufficiency of the discharge current. After this operation, the battery control unit 210 of the railroad vehicle 100 returns to Step S201 and repeats the operation.

Step S206: When the battery control unit 210 of the railroad vehicle 100 receives communication of the current insufficiency from another connected vehicle 10 via the control system C in a situation where there is a surplus of discharge current, it distributes the surplus of the discharge current to the other connected vehicle 10 via the power system E. After this operation, the battery control unit 210 of the railroad vehicle 100 returns to Step S201 and repeats the operation.

### <Effects of Embodiment 2>

By means of the series of operations described above, in Embodiment 2, the following effects can be obtained in addition to the effects of Embodiment 1.

(1) In Embodiment 2, the discharge current of the secondary battery 200a, which is insufficient due to the constraints of the battery usage conditions, can be compensated for by receiving a supply from the battery of another connected vehicle 10 having a surplus of current.
(2) In Embodiment 2, even if the discharge current is insufficient, since it can be compensated for from another connected vehicle 10, it is no longer necessary to frequently perform temporary power generation using the fuel engine 300a, and the fuel consumption amount can be reduced.
(3) The resetting of the battery usage conditions for each vehicle described in Embodiment 1 and the temporary accommodation of the discharge current between the vehicles described in Embodiment 2 are performed at the same time. Accordingly, a well-balanced battery management that eliminates the current insufficiency for each vehicle in the entire train formation while managing the lifespan of the secondary battery 200a for each vehicle is realized.

### <Supplementary Information>

It should be noted that, in the embodiments described above, application to a hybrid railroad vehicle equipped with a fuel engine 300a has been described. However, the field of application of the present invention is not limited thereto.

For example, the present invention may be applied to a railroad vehicle that operates by power supply and battery power in an operation section that receives power from an overhead wire or a power supply rail or the like, and operates only by battery power in an operation section that does not have a power supply means.

It should be noted that, in the embodiments, the battery system 200 monitors the status of the secondary battery 200a, resets the battery usage conditions, controls the charge/discharge and temperature of the secondary battery 200a, and accommodates the current insufficiency, but the present invention is not limited to this. For example, some or all of these functions may be shared by the control device of the railroad vehicle 100.

In addition, in Embodiment 2 of the embodiments, accommodation of the current insufficiency is performed between vehicles, but the present invention is not limited thereto. For example, a plurality of secondary batteries 200a having different replacement timings may be mounted in the railroad vehicle 100, and the battery control unit 210 may accommodate the current insufficiency between the plurality of secondary batteries 200a.

As described above, various embodiments have been described, but the present invention is not limited to this content. Other aspects conceivable within the scope of the technical idea of the present invention are also included within the scope of the present invention. For example, the above-described examples have been described in detail in order to explain the present invention in an easy-to-understand manner, and are not necessarily limited to those comprising all the described configurations.

It is also possible to replace a part of the configuration of one embodiment with the configuration of another embodiment, and it is also possible to add the configuration of one embodiment to the configuration of another embodiment.

Further, it is possible to add, delete, or replace a part of the configuration of each embodiment.

### [Reference Signs List]

C... Control system, E... Power system, 10... Connected vehicle, 100... Railroad vehicle, 200... Battery system, 200a... Secondary battery, 200b... Battery replacement package, 210... Battery control unit, 220... Estimation unit, 221... Battery information acquisition unit, 222... Time information acquisition unit, 223... History storage unit, 224... Lifespan prediction unit, 230... Restriction unit, 231... Target lifespan setting unit, 232 ... Lifespan insufficiency calculation unit, 233... Restriction setting unit, 300... Vehicle engine, 300a... Fuel engine, 310... Generator, 330... Main converter, 350... Railroad vehicle motor, 360... Power supply line

## Claims

1. A battery system having a repeatedly usable battery, the battery system comprising:
a battery control unit that controls a lifespan of the battery by constraining a battery usage condition associated with battery lifespan deterioration;
an estimation unit that calculates an estimated lifespan of the battery obtained by constraining the battery usage condition; and
a restriction unit that, in a case that the calculated estimated lifespan is less than a target lifespan of the battery, restricts and resets the battery usage condition of the battery control unit in order to extend a lifespan of the battery and reduce an insufficiency amount (hereinafter referred to as a "lifespan insufficiency") of the target lifespan.

2. The battery system according to claim 1, wherein:
the battery control unit compensates for a current amount insufficiency by receiving, from another battery that has a surplus of current, supply of a current amount of the battery that is insufficient due to restriction of the battery usage condition.

3. The battery system according to claim 2, wherein:
the battery is a railroad vehicle battery for use in a railroad vehicle; and
the battery control unit compensates for a current amount insufficiency by receiving, from a battery of another connected vehicle that has a surplus of current, supply of a current amount of the battery that is insufficient due to restriction of the battery usage condition.

4. The battery system according to any one of claims 1 to 3, wherein:
the restriction unit gradually performs resetting to restrict the battery usage condition, and gradually eliminates the lifespan insufficiency of the battery.

5. The battery system according to any one of claims 1 to 4, wherein:
the battery usage condition for which resetting to restrict is performed in the restriction unit includes at least one from a group including: a charge voltage constraint, a discharge current constraint, a charge current constraint, a battery state of charge (SoC) constraint, and a battery temperature constraint.

6. The battery system according to any one of claims 1 to 5, wherein:
the restriction unit determines, according to the lifespan insufficiency, a constraint on an upper limit temperature of the battery; and
the battery control unit monitors a present temperature of the battery, and controls a charging/discharging current of the battery according to a difference between the upper limit temperature and the present temperature.

7. The battery system according to any one of claims 1 to 6, wherein:
the battery control unit, the estimation unit, and the restriction unit are integrally configured with respect to the battery; and
when replacing a lifespan of the battery, the battery system can be integrally replaced.

8. A railroad vehicle comprising:
the battery system according to any one of claims 1 to 7; and
a vehicle unit that uses the battery of the battery system as at least one of its power supplies.

9. A battery management method that uses repeatedly usable batteries, the battery management method comprising:
a battery control step for controlling a lifespan of the battery by constraining a battery usage condition associated with battery lifespan deterioration;
an estimation step for calculating an estimated lifespan of the battery obtained by constraining the battery usage condition; and
a restriction step for restricting and resetting, in a case that the calculated estimated lifespan is less than a target lifespan of the battery, the battery usage condition of the battery control unit in order to extend a lifespan of the battery and reduce an insufficiency amount (hereinafter referred to as a "lifespan insufficiency") of the target lifespan.

10. The battery management method according to claim 9, wherein:
the battery control step compensates for a current amount insufficiency by receiving, from another battery that has a surplus of current, supply of a current amount of the battery that is insufficient due to restriction of the battery usage condition.

11. The battery system according to claim 9 or 10, wherein:
the battery is a railroad vehicle battery for use in a railroad vehicle; and
the battery control step compensates for a current amount insufficiency by receiving, from a battery of another connected vehicle that has a surplus of current, supply of a current amount of the battery that is insufficient due to restriction of the battery usage condition.
